# EUROPEAN PATENT APPLICATION

(11) **EP 1 209 067 A1**
(43) Date of publication of application: **29.05.2002**
(21) Application number: 00830769.6
(22) Date of filing: 22.11.2000
(51) Int. Cl.: B62D 25/16

(54) **Adjustable pincers like clamp for supporting mudguards, particularly for lorries and traliers**

(71) Applicant: Domar S.r.l., 70022 Altamura (BA) (IT)
(72) Inventor: Lorusso, Pasquale, 70022 Altamura (BA) (IT)
(74) Representative: Iannone, Carlo Luigi

(57) **Abstract**

This invention relates to an adjustable pincers like clamp for supporting mudguards, particularly for lorries and trailers, realized with an integral body (19) comprising a hollow cylinder (20), the surface of which has a slot (31) parallel to the axis (AA') of said cylinder (20), provided with two base lateral feet (21, 21') corresponding to said slot (31), each of said feet (21, 21') being provided with a bottom base shoe (23, 23') adapted to be inserted into a corresponding guide member (5) for enabling said clamp to slide in orthogonal direction with respect to the axis (AA') of said cylinder (20), said integral body (19) being also provided with tightening means (22,22',24,24',30) adapted to tighten the cylinder (20) around a bar (2) and to rigidly connect the clamp to said guide members (5) into which said shoes (23,23') are inserted.

## Description

This invention relates to an adjustable clamp for supporting mudguards, particularly for lorries and trailers, which enables a stable connection to be realized in simple, reliable and economically feasible way between a supporting bar and a mudguard.

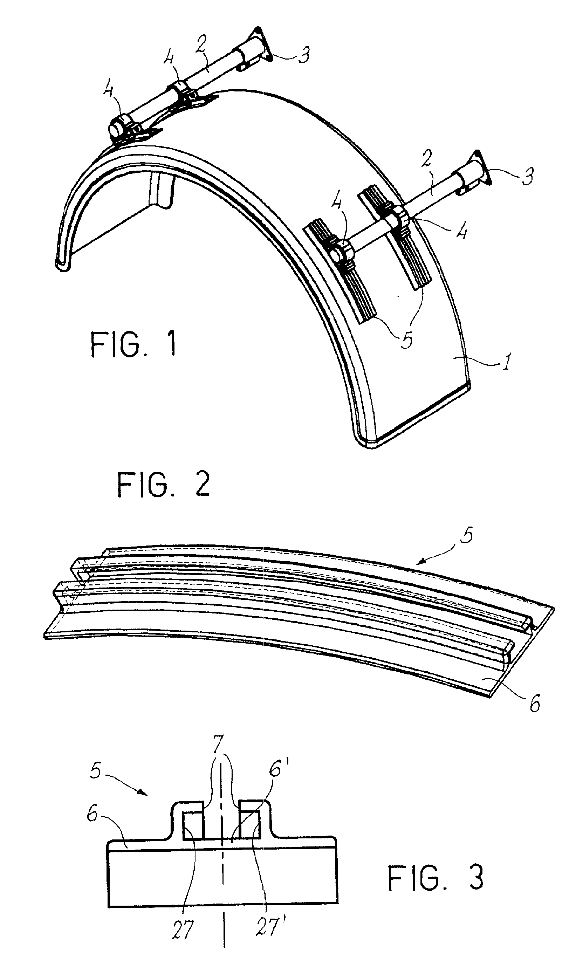

The mudguards of special purpose vehicles, particularly vehicles of large dimensions, such as lorries and trailers, are not usually rigidly connected to the chassis of the concerned vehicle, but they are mounted by means of specially designed, preferably adjustable support structures, such as the very popular ones shown in Figure 1.

A mudguard 1 is rigidly connected to the chassis of the vehicle by means of two bars 2, each of which has an end portion connected to a pincers member 3 rigidly connected to the chassis and the other end portion inserted into corresponding holes of a pair of pincers like clamps 4, slidably arranged in guide members 5 rigidly connected to the concerned mudguard 1. By slidingly moving said clamps 4 in the guide members 5, it is possible to adjust their position with respect to said mudguard 1. The rigid connection between the guide members 5 and the mudguard 1 can be implemented in various ways, for instance by glueing. Of course, the number of said bars can also be higher than two.

By particularly referring to Figures 2 and 3, it can be observed that the guide members 5 are provided with a base portion 6 in which a sliding channel is provided having an U-shaped profile with folded end portions 7. The base portion 6 is advantageously curvilinear so as to let the base portion match the corresponding surface of said mudguard 1.

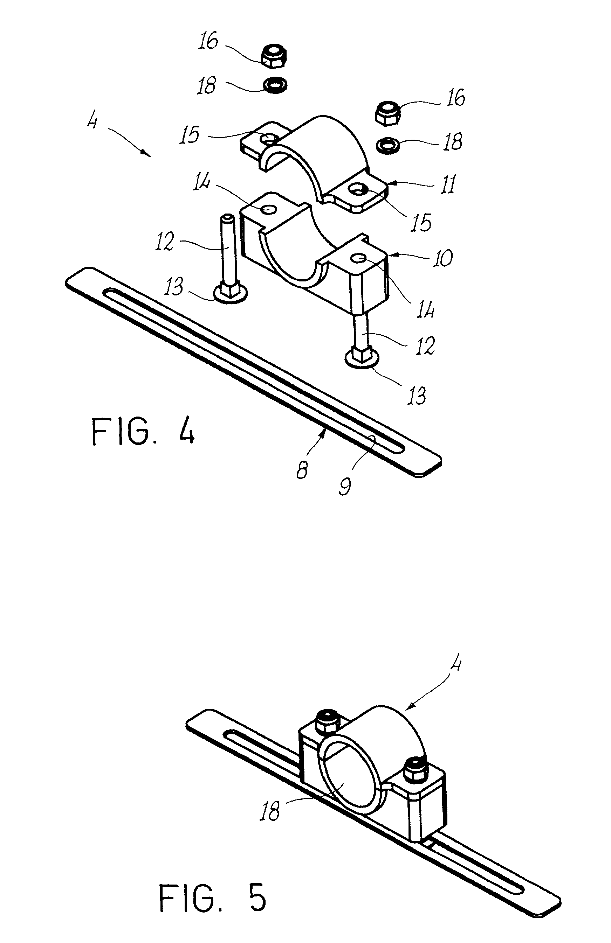

A conventional pincers like clamp 4 of a presently used type is shown in Figures 4 and 5. Such clamp 4 comprises a base plate 8 having a central slot 9, a lower jaw 10 and an upper jaw 11. Said base plate 8, lower jaw 10 and upper jaw 11 are fixed to each other by means of two enlarged head screws 12, inserted into slot 9 of the base plate 8 and into corresponding through holes 14 and 15 provided in said lower jaw 10 arid in said upper jaw 11, respectively. Two nuts 16, preferably provided with washers 17, are utilized to tighten the corresponding screws 12 on said upper jaw 11, thereby assuring a stable coupling between the clamp 4 and the bar 2 inserted into a cylindrical seat 18 formed by said jaws 110 and 11.

The rigid connection between the clamp 4 and the mudguard 1 is realized by inserting said base plate 8 into the corresponding sliding guide member and by tightening the nuts 16 on the corresponding screws 12, which results into a pressure being exerted by base plate 8 and by lower jaw 10 on the folded end portions 7 of the U-shaped profile of said sliding guide 5.

Anyway, the conventional pincers like clamps 4 have some drawbacks.

In the first place, the noticeable number of parts makes the clamp 4 not easily handy and simply maneuverable.

Furthermore, the rigid connection to the mudguard 1 is not completely reliable, due to the fact that it is realized only by the pressure exerted by various components (base plate 8 and lower jaw 10) on the folded end portions 7 of the U-shaped profile of said guide member 5 and the more so when it is considered that the vibrations which the components are subjected to and the subsequent adjustments made thereon cause the folded end portions 7 and the component parts of the clamp 4 to deteriorate.

Lastly, the high number of said component parts makes the clamps 4 rather expensive.

It is the object of this invention, therefore, to provide an economically convenient, adjustable clamp for supporting mudguards, so as to assure a reliable and stable connection between the mudguard and the chassis of the vehicle and an easily maneuverable clamp.

It is specific subject-matter of this invention an adjustable pincers like clamp for supporting mudguards, particularly for lorries and trailers, realized with an integral body, preferably substantially shaped as an upper case omega, comprising a hollow cylinder, the surface of which has a slot parallel to the axis of said cylinder, provided with two base lateral feet corresponding to said slot, each of said feet being provided with at least a bottom base shoe adapted to be inserted into a corresponding guide member for enabling said clamp to slide in orthogonal direction with respect to the axis of said cylinder, said integral body being also provided with tightening means adapted to tighten the cylinder around a bar and to rigidly connect the clamp to said guide members into which said shoes are inserted.

According to this invention, said tightening means can comprise at least a pair of coaxial, possibly threaded through holes provided in said two base feet, having their axis perpendicular to the axis of the cylinder and adapted to receive a screw.

Preferably, according to this invention, said tightening means are provided with a single pair of coaxial, possibly threaded through holes.

Again according to this invention, at least a pair of shoes, formed by a shoe of each of said two feet, are made such that said corresponding shoes are aligned with each other along a direction orthogonal to the axis of the cylinder and are shaped in upper plan view in such a way that they are antisymmetrical with respect to the axis of said cylinder, since their facing surfaces are planar parallel and slanted according to an angle in the range of 25° to 65° with respect to the axis of said cylinder.

Further according to this invention, at least a pair of shoes, formed by a shoe of each of said two feet, have the lower walls lying on the same concave surface.

Preferably, according to this invention, said integral body is realized in plastic material.

Still more preferably, according to this invention, each of said two feet is provided with only one bottom base shoe, the shoes of said two feet being aligned with each other along a direction orthogonal to the axis of said cylinder and adapted to be inserted into the same guide member in order to enable the clamp to slide in a direction orthogonal to the axis of said cylinder.

This invention will be now described by way of illustration and not by way of limitation according to its preferred embodiment, by particularly referring to the Figures of the enclosed drawings, in which
Figure 1 is a perspective view of a mudguard supported by two adjustable support structures comprising clamps slidable within guide members;
Figure 2 is a perspective view of the sliding guide member of one of support structures of Figure 1;
Figure 3 is a side elevation view of the guide member shown in Figure 2;
Figure 4 is a perspective exploded view of a conventional support clamp;
Figure 5 is a perspective view of the conventional support clamp of Figure 4;
Figure 6 is an upper perspective view of a support clamp according to this invention;
Figure 7 is a lower perspective view of the clamp of Figure 6;
Figure 8 is a bottom plan view of the clamp of Figure 6;
Figure 9 is a cross-section view taken along line IX-IX of Figure 8; and
Figure 10 is a side elevation view of the clamp of Figure 6.

In all Figures, the same reference numerals are used to designate the same elements.

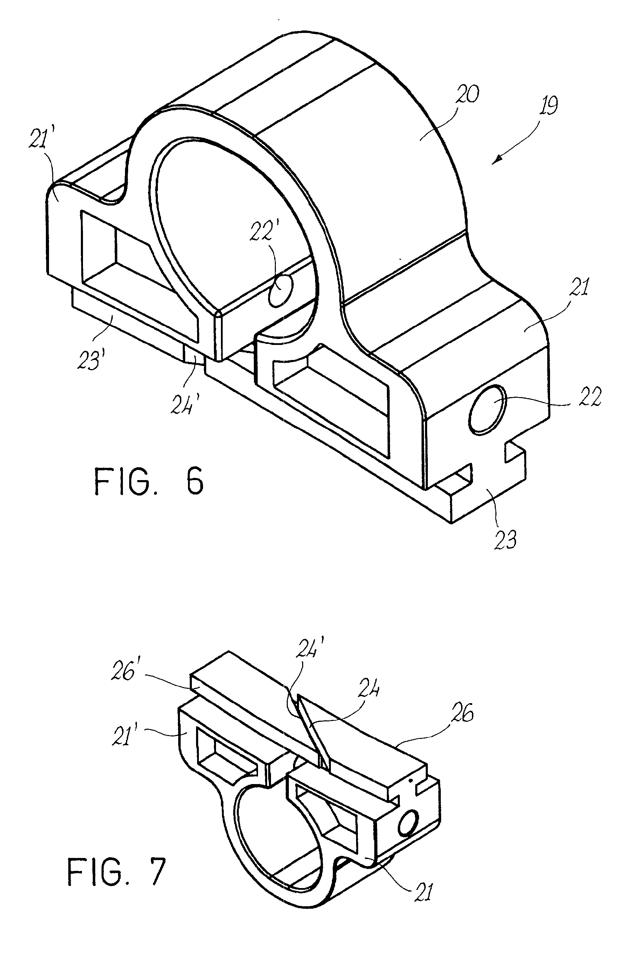

By referring to Figures 6 to 10 of the enclosed drawings, it can be observed that the adjustable pincers like clamp according to this invention is realized by an integrally formed body 19, substantially shaped as upper case omega, preferably in plastic materials. In particular, body 119 comprises a hollow cylinder 20, the surface of which has a slot 31 parallel to the axis AA' of said cylinder 20, provided with two base lateral feet 21 and 21' corresponding to said slot 31.

Feet 21 and 21' are provided with two coaxial longitudinal through holes 22 and 22' having their axis FF' perpendicular to axis AA' of cylinder 20, adapted to receive a screw, not shown. Each of said feet 21 and 21' is provided with a base longitudinal shoe 23 and 23', respectively.

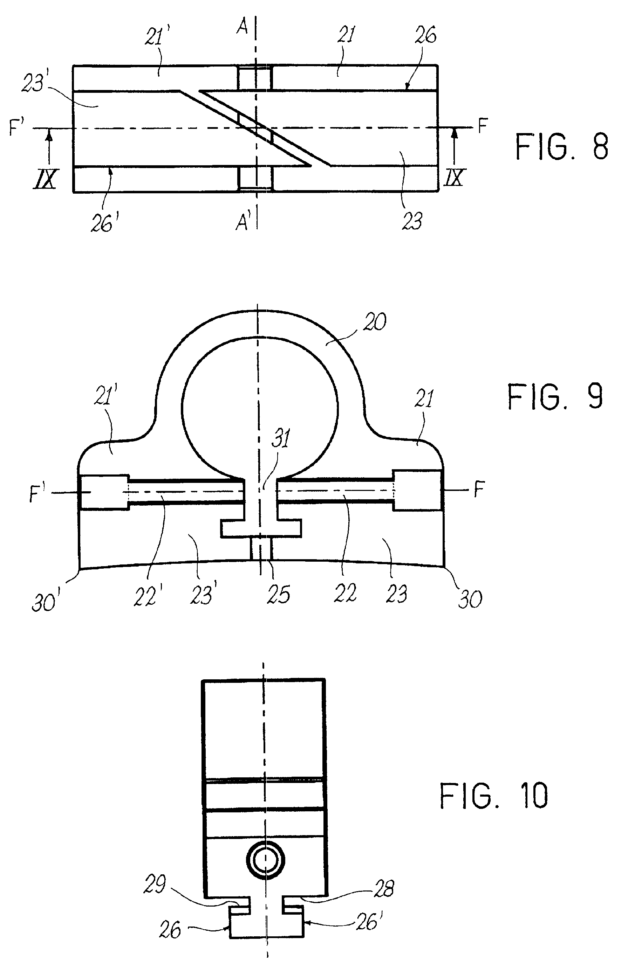

Said shoes 23 and 23', which are aligned with each other along their longitudinal direction and have such a width as to enable them to be inserted into said guide member 5, as shown in Figures 1 - 3, are shaped in upper plan view in such a way that, as it is particularly shown in Figure 8, they are antisymmetrical with respect to axis AA' of said cylinder 20, since their facing surfaces 24 and 24', respectively, are parallel and slanted according to an angle in the range of 25° and 65° with respect to axis AA'. Furthermore, as it is particularly shown in Figure 9, the lower walls of said two shoes 23 and 23' are lying on the same concave surface 25 (namely a surface curved inwardly of the clamp).

The rigid connection between the clamp according to this invention and the mudguard is realized by inserting the shoes 23 and 23' into said sliding guide member 5, rigidly connected to said mudguard in similar way as in Figure 1, and by tightening a screw inserted into holes 22 and 22' with a correspondling nut. The tightening operation on said screw causes the slot 31 of the surface of said cylinder 20 to close arid consequently the cylinder 20 to be tightened around a bar, similar to bars 2 shown in Figure 1, rigidly coupled to the chassis of the vehicle, as well as the feet 21 and 21' to move toward each other. When said shoes 23 and 23' contact each other, the inclination of surfaces 24 and 24' causes them to slide with respect to each other and this movement causes the external walls 26 and 26' of shoes 23 and 23', respectively, to exert a pressure force on the corresponding internal vertical walls 27 and 27' of guide member 5.

In addition, the movement of feet 21 and 21' toward each other causes the lower walls 28 of feet 21 and 21' and the upper walls 29 of shoes 23 and 23' to exert a pressure against the folded end portions 7 of said guide member 5. Such pressure is enhanced by the curvilinear profile of the lower walls of said two shoes 23 and 23', which, in turn, causes the external corners 30 and 30' to grip against the internal base surface of said guide member 5, thereby generating an advantageous anti-sliding effect for the shoes 23 and 23' in said guide member 5.

Further embodiments of the clamp according to this invention provide for the holes 22 and 22' to be threaded.

Still further embodiments of the clamp according to this invention provide for more than one through holes, possibly threaded holes, in each foot 21 and 21', so as to receive more than one tightening screw.

Furthermore, other embodiments of the clamp according to this invention can be provided with said two feet 21 and 21' having more than a single pair of shoes, similar to the shoes shown in Figures 6 - 10, the shoes of each pair being aligned with each other and each shoe pair being inserted in a distinct guide member 5.

It will be apparent to those skilled in the art that the integral body 19, into which a single tightening screw is inserted, enables to increase the ease and the utilization possibility of the clamp according to this invention with respect to the conventional clamps.

Furthermore, by utilizing the multiple effects of the pressures exerted by shoes 23 and 23' and by lower walls 28 of said feet 21 and 21' on all internal walls of said guide member 5 as well as the gripping effect of the external corners 30 and 30' of shoes 23 and 23' on the internal base surface 6' of said guide member 5, the coupling between the concerned clamp and the guide member 5 is found to be more effective than the coupling that can be obtained by means of conventional clamps.

In addition, by making the clamp according to this invention as an integral body (19), the manufacturing processes are simplified, consequently reducing the manufacturing cost of the clamp.

This invention has been described by way of illustration, but not by way of limitation, according to its preferred embodiment, but it should be understood that variations and/or changes can be made by those skilled in the art without departing from the scope of this invention as defined by the attached claims.

## Claims

1. An adjustable pincers like clamp for supporting mudguards, particularly for lorries and trailers, realized with an integral body (19) comprising a hollow cylinder (20), the surface of which has a slot (31) parallel to the axis (AA') of said cylinder (20), provided with two base lateral feet (21, 21') corresponding to said slot (31), each of said feet (21, 21') being provided with a bottom base shoe (23, 23') adapted to be inserted into a corresponding guide member (5) for enabling said clamp to slide in orthogonal direction with respect to the axis (AA') of said cylinder (20), said integral body (19) being also provided with tightening means (22,22',24,24',30) adapted to tighten the cylinder (20) around a bar (2) and to rigidly connect the clamp to said guide members (5) into which said shoes (23,23') are inserted.

2. An adjustable clamp according to claim 1, **characterized in that** said integral body (19) is substantially shaped as an upper case omega.

3. An adjustable clamp according to claim 1 or 2, **characterized in that** said tightening means comprise at least a pair of coaxial through holes (22,22') provided in said two base feet (21,21'), having their axis (FF') perpendicular to the axis (AA') of the cylinder (20) and adapted to receive a screw.

4. An adjustable clamp according to claim 3, **characterized in that** said holes (22,22') are threaded.

5. An adjustable clamp according to claim 3 or 4, **characterized in that** said tightening means are provided with a single pair of coaxial through holes (22,22').

6. An adjustable clamp according to any one of the preceding claims, **characterized in that** at least a pair of shoes (23,23'), formed by a shoe of each of said two feet (21,21'), provides that said corresponding shoes (23,23') are aligned with each other along a direction orthogonal to the axis (AA') of the cylinder and are shaped in upper plan view in such a way that they are antisymmetrical with respect to the axis (AA') of said cylinder (20), since their facing surfaces (24,24') are planar parallel and slanted according to an angle in the range of 25° to 65° with respect to the axis (AA') of said cylinder (20).

7. An adjustable clamp according to any one of the preceding claims, **characterized in that** at least a pair of shoes (23,23'), formed by a shoe of each of said two feet (21,21'), have the lower walls lying on the same concave surface (25).

8. An adjustable clamp according to any one of the preceding claims, **characterized in that** said integral body is realized in plastic material.

9. An adjustable clamp according to any one of the preceding claims, **characterized in that** each of said two feet (21,21') is provided with only one bottom base shoe (23,23'), the shoes (23,23') of said two feet (21,21') being aligned with each other along a direction orthogonal to the axis (AA') of said cylinder (20) and adapted to be inserted into the same guide member (5) in order to enable the clamp to slide in a direction orthogonal to the axis (AA') of said cylinder (20).
